# EUROPEAN PATENT SPECIFICATION

(11) **EP 2 815 873 B1**
(45) Date of publication and mention of the grant of the patent: **20.03.2019**
(21) Application number: 14170456.9
(22) Date of filing: 29.05.2014
(51) Int. Cl.: B22F 3/105, B29C 64/153, B29C 64/40, B22F 5/00, B23K 15/00, B33Y 10/00

(54) **Additive layer manufacturing method**
Additives Herstellungsverfahren
Procédé de fabrication additive

(30) Priority: 17.06.2013 GB 201310762
(43) Date of publication of application: 24.12.2014
(73) Proprietor: Rolls-Royce plc, London SW1E 6AT (GB)
(72) Inventor: Wood, Scott, Nottingham NG17 1LH (GB); Blackmore, Michael, Sheffield S11 7AG (GB); Todd, Iain, Sheffield S6 6FX (GB)
(74) Representative: Rolls-Royce plc

(56) References cited:
- EP-A1- 2 022 622
- EP-A1- 2 156 941
- EP-A2- 1 486 318
- GB-A- 2 458 745
- GB-A- 2 479 616
- US-A1- 2002 171 177
- US-A1- 2013 055 568

## Description

The present invention relates to an additive layer manufacturing (ALM) method, and more particularly relates to an ALM for the production of a three-dimensional product via successive fusion of parts of a powder bed, said parts corresponding to successive cross-sections of the product.

Additive layer manufacturing has become more widely used over recent years in order to produce three-dimensional products. Electron Beam Melting (EBM) is a particular type of ALM technique which is used to form fully dense metal products (such as component parts for gas turbine engines in the aerospace industry). The technique involves using an electron beam in a high vacuum to melt metal powder in successive layers within a powder bed. Metal products manufactured by EBM are fully dense, void-free, and extremely strong.

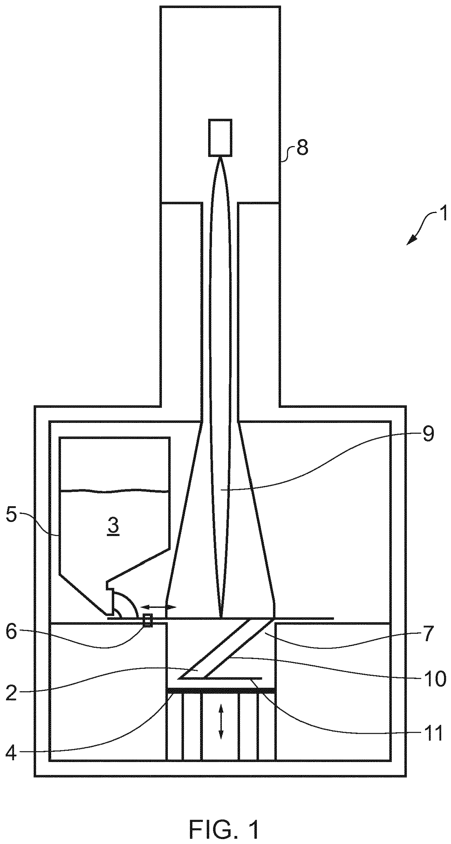

Figure 1 illustrates a known configuration of apparatus 1 which is used in an EBM method to produce a three-dimensional metal product 2 from metal powder 3. The apparatus comprises an adjustable height work platform 4 upon which the product 2 is to be built, a powder dispenser 5 such as a hopper, a rake 6 or other arrangement operable to lay down a thin layer of the powder 3 on the work platform 4 to form the powder bed 7, and an electron beam column 8 for directing and focussing an electron beam 9 downwardly on the powder bed 7 in order to melt parts of uppermost layer of the powder bed 7. The entire apparatus is housed within a vacuum housing and the operative parts are computer controlled.

During operation, the electron beam column 8 is energised under the control of the computer to focus the electron beam onto the powder bed 7 and to scan the beam across the powder bed to melt a predetermined area of the top layer of the powder bed 7 and thereby form a cross-section of the three-dimensional product 2.

The three-dimensional product 2 is built up by the successive laying down of powder layers on the powder bed 7 and melting of the powder in predetermined areas of the layers to form successive cross-sections of the product 2. During a work cycle the work platform 4 is lowered successively relative to the electron beam column 8 after each added layer of powder has been melted, ready for the next layer to be laid down on top. This means that the work platform 4 starts in an initial position which is higher than the position illustrated in figure 1, and in which position a first layer of powder of necessary thickness is laid down on the work platform 4 by the rake 6. In order to prevent damage to the work platform 4 by the electron beam 9, the first layer of powder is typically made thicker than the other applied layers, thereby preventing melt-through by the electron beam 9. This is why the product 2 appears spaced above the work platform 4 within the powder bed 7 in figure 1. The work platform 4 is then successively lowered for the laying down of a new powder layer for the formation of a new cross-section of the product 2.

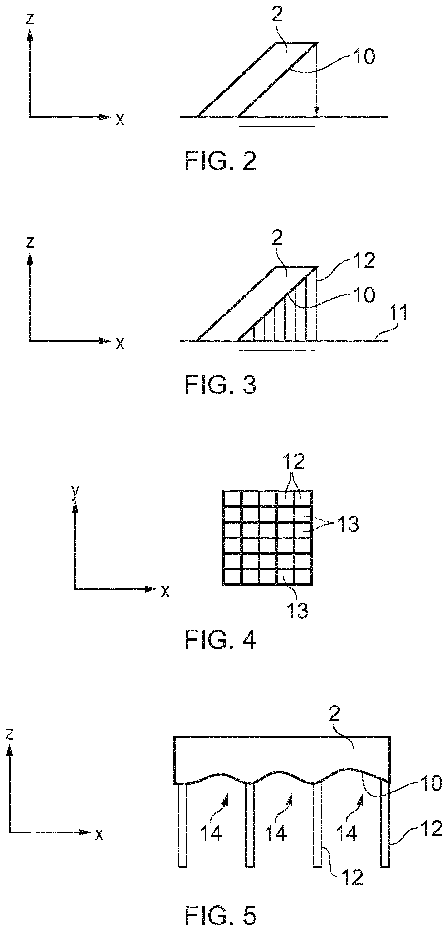

When the electron beam 9 impinges on the top layer of powder within the powder bed 7, the kinetic energy of the electrons is transformed into heat which melts the powder to form the respective cross-section of the product 2. The layer previously scanned usually serves as a rigid support for the next layer above. However, when the product has a shape which defines an overhanging or downwardly facing surface 10 such as is illustrated in figure 1, then the top layer of powder being scanned by the beam 9 will not have a rigid support beneath it. In this context, a downwardly facing surface 10 is defined as one whose orientation enables its projection onto a horizontal two-dimensional plane below it, as illustrated schematically in Figure 2.

If no support is provided beneath downwardly facing surfaces 10 of the product 2 as it is formed, then localised overheating can occur during melting of the powder by the beam 9 which can result in poor surface finish to the product. Also, distortion of the product can occur and so it has been proposed previously to provide some means of mechanically fixing the product in place relative to a metallic substrate or base plate 11 on which the product is formed.

Previously proposed support structures 12 designed to avoid the problems mentioned above in relation to unsupported downwardly facing surfaces generally consist of an array of thin walls that are manufactured at the same time as the product and from the powder via the same EBM technique. These thin walls are created so as to extend between the downwardly facing surface 10 and another solid surface. The other solid surface can either be a base plate 11 on which the product is formed, or a previously formed upwardly facing surface of the product in the case where the downwardly facing surface 10 is formed above such a surface. These structures 12 are typically referred to as 'wafers', and are illustrated schematically in figures 3 and 4. The wafers are designed to be removable from the downwardly facing surface 10 by hand or machine tools during a subsequent finishing procedure.

As illustrated most clearly in figure 4, the thin-walled structures or wafers 12 may be provided in a lattice configuration as viewed from below the downwardly facing surface 10, which thus defines an array of small spaces 13 between the wafers 12. It is common for powder feedstock to become trapped in these spaces 13 as the wafers are built up during the EBM process, and the trapped powder can then be difficult to remove and separate from the fused powder forming the wafers 12 themselves during the subsequent finishing process. The trapped powder is thus typically discarded rather than being recycled for subsequent use. Powder feedstock used to manufacture component parts of gas turbine engines is typically very expensive, so this wastage increases the overall manufacturing cost.

It has often been found that the wafer supports 12 produced by prior art methods can be difficult to remove from some intricately shaped products during subsequent finishing processes.

The deposition of wafer supports 12 must start on a solid substrate, which as mentioned above can either be an area of the component being manufactured, or an underlying base plate. The surface finish and geometrical tolerance of the component in contact with the wafers is also reduced and the total foot print of the supported component is increased. Both reduce the manufacturing efficiency for the component

Distortion of the downwardly facing surface 10 represents another problem that can arise when utilising wafer supports 12. This distortion typically arises from the formation of concave regions 14 on the supported surface in the area between each wafer support, as illustrated schematically in figure 5.

GB 2479616 relates to a method of forming a metal article involving inserting a removable preform into a powder bed and building part of the article on the preform using an additive layer process.

EP 1486318 relates to a method for producing an object through solid freeform fabrication, the method including fabricating a support structure about at least a portion of the object by applying a binder or focussed energy to a build material.

EP 2156941, which belongs to the state of the art according to Article 54(3) EPC, relates to a filter produced using an energy beam melting process in which pedestals are fixed to a starting platform to keep a ring attached to the starting platform during the forming process.

It is a preferred object of the present invention to provide an improved ALM method for the production of a three-dimensional product.

According to the present invention, there is provided an additive layer manufacturing (ALM) method for the production of a three-dimensional product via successive fusion of parts of a powder bed, according to claim 1.

Preferably, at least some of said successive steps in which energy is focussed on a support area of a respective powder layer also involve focussing energy on a said predetermined area of the powder layer to fuse said area of the powder layer and thereby form a cross-section of the product, the support area and the predetermined area being spaced apart. Said support pin preferably extends generally downwardly from said downwardly facing surface of the product.

Said successive steps in which energy is focussed on a support area of the respective powder layer may involve focussing energy on a plurality of said support areas in spaced relation to one another, to thereby form successive cross-sections of a plurality of said support pins, the support pins being formed in a spaced array within the powder bed. Preferably, said support pins are parallel to one another. Alternatively, however, the pins may be non-parallel to one another.

In preferred embodiments the or each support pin is approximately cylindrical, and may optionally have a diameter in the range 0.2mm to 2mm.. It should be noted, however, that the pins can have alternative cross-sectional profiles such as, for example, square or hexagonal.

In some embodiments of the invention the or each said support area is circular, and energy is focussed on successive said support areas of respective powder layers which are in alignment to one another to form successive circular cross-sections of the or each support pin which is thus cylindrical. In such an embodiment, the or each support pin may thus be formed so as to extend vertically within the powder bed.

Alternatively, the or each said support area is approximately elliptical, and energy is focussed on successive said support areas of respective powder layers which are imbricated to form successive elliptical cross-sections of the or each support pin which is thus cylindrical. In such an embodiment, the or each support pin may thus be formed so as to extend non-vertically within the powder bed.

According to the invention, the free end of the or each said support pin is spaced from any other surface of the product, and is also spaced from any base plate used to support the powder bed.

The free end of the or each said support pin may be formed by focussing energy on an initial support area which is supported only by underlying unfused powder in the powder bed, to fuse said initial support area and thereby form the free end.

Preferably, the method involves Electron Beam Melting and is used to manufacture metal products. Accordingly, said powder is preferably metal powder, and said steps of focussing energy on said areas of the powder layers preferably involves the use of an electron beam to melt said areas of the powder layers.

According to another aspect of the present invention, the above-defined method may be used to manufacture a component of a gas turbine engine, and involves the step of removing the or each said support pin from said product to form said component.

So that the invention may be more readily understood, and so that further features thereof may be appreciated, embodiments of the invention will now be described by way of example with reference to the accompanying drawings in which:
Figure 1 (discussed above) is a schematic vertical cross-sectional view showing a generally conventional apparatus suitable for use in an ALM method for the manufacture of a three-dimensional product from powder feedstock;
Figure 2 (discussed above) is a schematic cross-sectional view showing a product with a downwardly facing surface;
Figure 3 (discussed above) is a view similar to that of Figure 2, but which shows the downwardly facing surface supported by prior art wafer supports;
Figure 4 is a schematic underneath plan view showing the wafer supports of Figure 3 in more detail;
Figure 5 is an enlarged cross-sectional view showing distortion of a downwardly facing surface of a product, between the prior art wafer supports;
Figure 6 is a schematic cross-sectional view showing part of a product having a horizontally extending, downwardly facing surface supported by a plurality of support pins formed via the method of the present invention;
Figure 7 is a schematic underneath plan view showing the arrangements of support pins in further detail;
Figure 8 is a schematic cross-sectional view showing a product having downwardly facing surfaces which can be manufactured via the method of the present invention;
Figure 9 is a schematic illustration showing an initial step of the method of the invention;
Figure 10 is a view similar to that of figure 9, but which shows a subsequent step of the method;
Figure 11 shows another subsequent step of the method involving the fusion of areas of a layer of powder;
Figure 12 is a plan view from above, showing the arrangement of the fused areas shown in figure 11;
Figure 13 shows a subsequent step of the method;
Figure 14 shows yet another subsequent step of the method;
Figure 15 is a schematic cross-sectional view showing part of a product having an inclined and downwardly facing surface supported by a plurality of support pins which may formed via the method of the present invention.
Figure 16 is a horizontal cross-sectional view taken along line I-I of figure 15.

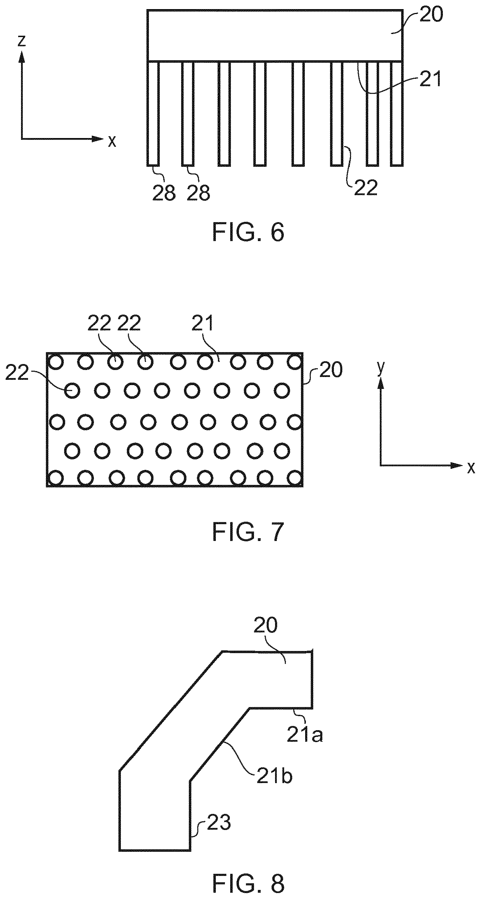

Turning now to consider the drawings in more detail, the method of the present invention will now be described in detail, with particular reference to figures 6 to 16.

The technical effect of the present invention can most easily be understood with regard to figures 6 and 7 which show a product 20 which is manufactured by the method of the invention. The product 20 illustrated in figures 6 and 7 is a metal product and is formed via an ALM method from metal powder.

As illustrated most clearly in figure 6, the product has a horizontally oriented lower surface 21 which is downwardly facing. Figure 6 also shows the downwardly facing surface 21 being supported by a plurality of narrow and elongate support pins 22 which extend downwardly from the downwardly facing surface 21.

Figure 7 shows the arrangement of the support pins 22 as viewed from below the product 20 and shows the support pins 22 arranged in a generally regular array across the downwardly facing surface 20. The pins 22 are formed via fusion of the same powder feedstock from which the product 20 is formed, and via a similar technique. The pins 22 effectively substitute the wafer support structures 12 of the prior art described above and thus serve to support the downwardly facing surface 21 as the product 20 is built up in a powder bed. The size and configuration of the pins can vary, but it has been found that pins having a circular cross-section and a diameter of approximately 0.8mm provide particular advantages over the prior art wafer structures 12.

A supporting structure for the downwardly facing surface 21 which is formed from support pins 22 of the type illustrated has been found to be quicker and less expensive to produce than the prior art wafer structures 12, which makes their use very significant in a commercial ALM context.

It has been found that the supporting pins 22 do not trap un-melted powder feedstock between them to the same degree as prior art wafer structures, and they thus permit more efficient recycling of powder. It has also been found that the supporting pins 22 actually use less powder in their manufacture, which further reduces wastage of powder feedstock. The supporting pins 22 can also provide better control and reduction of distortion on the downwardly facing surface 22 and are also more easily removed during subsequent finishing of the product. As will become apparent from the following description of the method, the support pins 22 can be formed so as to have free ends formed within a powder bed, rather than needing to be built up from lower rigid surfaces such as might be defined by other parts of the product, or by a metal base plate inserted within the powder bed.

Figure 8 illustrates a vertical cross-section through an exemplary product 20 which is used herein to highlight key aspects of the present invention. As will be noted, the product 20 has two downwardly facing surfaces, namely a horizontally oriented surface 21a similar to the one shown in figure 6, and a sloping surface 21b which is inclined to the vertical in the orientation of the product shown. Additionally, beneath the sloping surface 21b, the product 20 also has a vertically oriented surface 23 which is not downwardly facing.

The method of the present invention can be performed using apparatus generally similar to the apparatus shown in Figure 1. Accordingly, particular reference is made herein to the use of Electron Beam Melting of metal powder feedstock. However, it is to be noted that the invention is not limited to EBM, and could be embodied in alternative ALM techniques in which a three-dimensional product is formed via successive fusion of parts of a powder bed, said parts corresponding to successive cross-sections of the product.

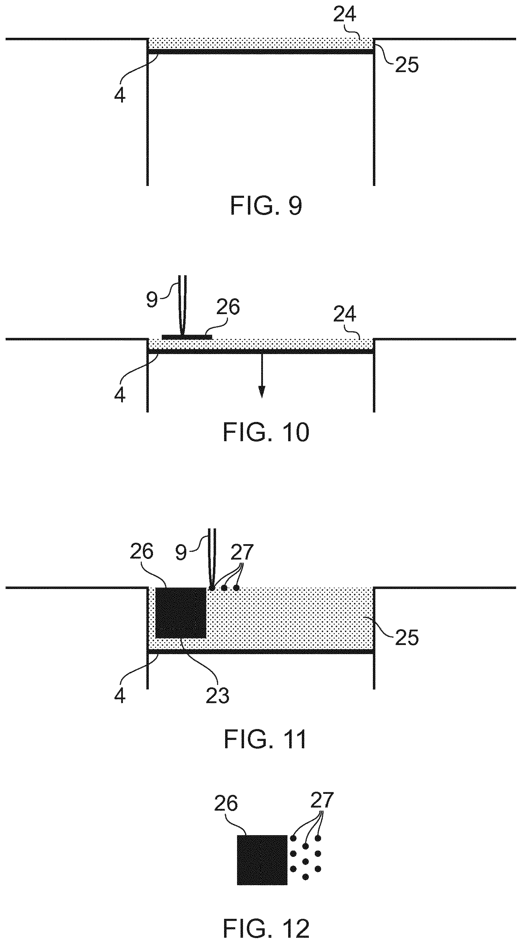

Figure 9 illustrates an initial step in the method of manufacturing the product, and shows the work platform 4 of an EBM apparatus in an initial raised position. An initial layer 24 of metal powder feedstock is laid on the work table 4 to start a powder bed 25. The powder may be spread into the layer 24 via the rake 6 of the apparatus shown in figure 1. In a similar manner to prior art methods, the initial layer 24 of the powder bed 25 can be laid thicker than subsequent layers.

Figure 10 shows a subsequent step in which an electron beam 9 is focussed on and scanned across a predetermined area 26 of the initial powder layer 24. The beam thus melts the powder in the predetermined area 26, thereby fusing the area 26 and forming an initial cross-section of the product 20. The shape of the cross-section is effectively defined by the shape of the predetermined area 26.

The table 4 is then lowered and another layer of powder is laid on top of the first layer 24, thereby adding to the powder bed 25, whereupon the electron beam 9 is again focussed on and scanned across an identically sized and positioned predetermined area of the top layer, thereby forming the next cross-section of the product, on top of the first cross-section.

The steps of laying down a layer of powder and then focussing/scanning the electron beam over a predetermined area of the layer are repeated to form successive cross-sections of the product 20, thereby gradually building the product from the bottom up. During the initial stages of the method, these steps are repeated to form identical and vertically aligned cross-sections of the product, thereby building up the lower part of the product having the vertical surface 23. It is to be noted that during this stage of the method, the respective predetermined areas 26 of each successive layer of powder are thus all aligned with one another.

Figure 11 illustrates a stage during the formation of the product at which the lower part of the product 20 and its vertical surface 23 is complete. This drawing therefore shows the final cross-section of the lower part of the product having just been formed by melting a predetermined area 26 of the top layer of powder on the powder bed 25. Before the table 4 is subsequently lowered ready for the next powder layer to be laid on the powder bed 25, the electron beam is refocused, in turn, on a plurality of small spaced apart support areas 27. The support areas are all spaced from the predetermined area of the same layer of powder which is fused to form the cross-section of the lower part of the product 20.

Figure 12 shows the arrangement of the support areas 27 in plan view. As will be noted, the support areas 27 are substantially circular in shape and arranged in a series of rows which cooperate to define a generally regular array. The support areas 27 most preferably have a diameter of approximately 0.8 mm.

As will be appreciated, focussing the electron beam 9 on each of the support areas 27 melts the powder in those areas, thereby fusing the powder. The fused support areas 27 of the top layer of powder thus form initial cross-sections of respective support pins 22 similar to those illustrated in figures 6 and 7. The initial cross-sections of the support pins 22 which are formed in this way define free ends 28 of the respective support pins 22.

It is to be noted that the free ends 28 of the support pins 22 are thus formed in the top layer of the powder bed 25 (at the stage illustrated in figure 11), and are spaced from all other rigid structures such as surfaces of the product 20 being formed and the work table 4. The initial support areas 27 which are fused to define the ends 28 of the support pins are only supported by underlying powder in the powder bed 25.

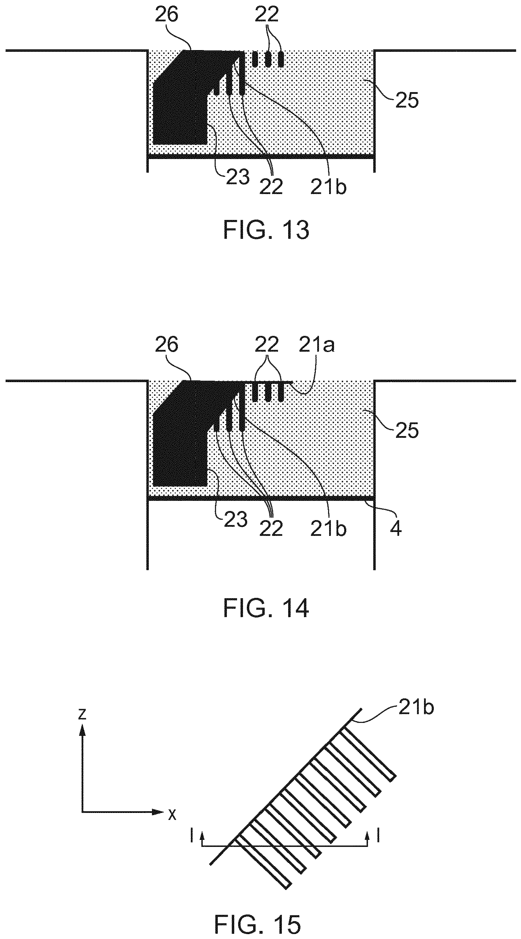

A series of further successive layers of powder then continue to be laid on the powder bed 25. When each layer has been laid, the electron beam 9 is focussed on correspondingly shaped and positioned support areas 27 to melt the powder material in the support areas and thereby steadily build up successive cross-sections of the support pins 22, as shown schematically in figure 13. The successive support areas 27 of each powder layer which are melted to form each support pin 22 are thus aligned with one another, such that each support pin 22 is built up vertically.

As will also be evident from figure 13, the electron beam 9 also continues to be focussed on respective predetermined areas 26 of the layers to melt the powder material in the predetermined areas and thereby define respective cross-sections of the central region of the product 20. However, the predetermined areas 26 of each layer which are melted during this stage of the procedure differ from one another in the sense that each successive predetermined area 26 is slightly larger than the preceding one such that in each layer a region of the predetermined area 26 is partially unsupported by the previously formed cross-section of the central region of the product 20. The inclined downwardly facing surface 21b is thus built up gradually in this way, layer by layer.

As will also be noted from figure 13, each support pin 22 which was shown being started in Figures 11 and 12, is eventually completed by its final cross-section being defined by a support area 27 which becomes subsumed by the predetermined area 26 of the respective layer of powder. The support pins 22 thus extend outwardly from the inclined downwardly facing surface 21b, the pins extending vertically downwardly within the powder bed 25 and are parallel to one another.

Figure 13 also shows a second set of support pins 22 being built up in substantially the same manner as described above; with a series of further support areas 27 of each layer being melted to define successive cross-sections of the support pins 22. The second set of support pins 22, shown as incomplete in figure 13, will provide support for the subsequent formed horizontal downwardly facing surface 21a of the product 20. As will be noted, the second set of support pins 22 are formed by melting respective support areas 27 of powder layers in which the partially unsupported predetermined areas 26 are also melted.

Figure 14 shows a stage in the production process in which the predetermined area 26 of the top powder layer has a size and shape corresponding to the cross-section of the upper region of the product 20. Figure 14 thus shows the creation of the first cross-section of the upper region of the product, and hence the horizontal downwardly facing surface 21a of the product. As will be noted, therefore, a very significant proportion of the predetermined area 26 of the upper powder layer is unsupported by the previously formed cross-section of the product 20. However, the downwardly facing surface defined by the top predetermined area 26 is supported by the previously built up support pins 22 beneath the surface 21a, the support pins thus extending downwardly from the surface 21a.

The subsequent cross-sections of the relatively wide upper region of the product 20 are then formed by melting substantially identical predetermined regions 26 of successive powder layers in a generally conventional manner.

As will be appreciated, when the product 20 has been fully formed via the method described above, it may be removed from the EBM apparatus and from the powder bed 25, whereupon the support pins 22 can be removed during a subsequent finishing process. As indicated above, the support pins 22 have been found to be significantly easier, and less wasteful, to remove than prior art wafer structures.

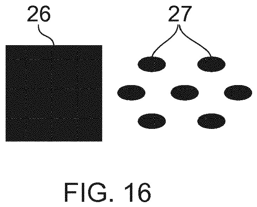

As will be appreciated, the invention has been described above with specific reference to an embodiment in which the support pins 22 are parallel to one another and are formed such that they extend substantially vertically within the powder bed. This is achieved by melting support areas 27 of successive layers which are substantially circular and which are arranged in alignment with one another, such that respective cross-sections of the pins 22 are built up vertically. However, figures 15 and 16 illustrate an alternative method in which the pins 22 are formed so to extend non-vertically within the powder bed 25, such that the pins are non-parallel to the vertical working axis of the machine

Figure 15 shows an inclined downwardly facing surface 21b of a product, from which depend a plurality of parallel support pins 22. However, as can be seen immediately, the pins 22 make an acute angle to the vertical axis z rather than being oriented vertically as shown in figure 6. Figure 16, which illustrates a similar view to figure 12 described above, shows how this achieved.

As will be noted from figure 16, in this embodiment, the support areas 27 of each powder layer are elliptical in shape, rather than circular as was the case in the embodiment described above and as shown in figure 12. Furthermore, as will be appreciated having regard to figure 15, the elliptical support areas 27 pertaining to each support pin are melted in successive powder layers in an imbricated manner, such that the successive horizontal cross-sections of each support pin are partially horizontally offset from one another. In this manner, the support pins 22 are built up so as to still be cylindrical in form, but so that they are non-vertical within the powder bed 25. This type of support structure can be very useful and offers increased flexibility over prior art wafer support structures.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure.

## Claims

1. An additive layer manufacturing (ALM) method for the production of a three-dimensional product (20) via successive fusion of parts of a powder bed (25), said parts corresponding to successive cross-sections of the product (20), the method comprising the steps of: a) laying down a powder layer (24) on said powder bed (25), and b) focussing energy (9) on a predetermined area (26) of said powder layer to fuse said area (26) of the powder layer and thereby form a cross-section of the product (20); wherein steps a) and b) are repeated to form successive cross-sections of the product (20), and wherein at least one of said steps b) involves focussing said energy (9) on an area (26) of the respective powder layer which is at least partially unsupported by a previously formed cross-section of the product (20) to thereby form a downwardly facing surface (21) of the product, the method being **characterised in that** at least some of said successive steps b) involve focussing energy (9) on a support area (27) of the respective powder layer, to fuse the support area (27) and thereby form successive cross-sections of a at least one support pin (22) within the powder bed (25), the at least one support pin (22) extending outwardly from the downwardly facing surface (21) of the product when it is formed, so as to support the downwardly facing surface (21), wherein the at least one support pin (22) has a free end which is formed within the powder bed (25), the free end of the or each said support pin (22) being spaced from any other surface of the product (20) and being also spaced from any base plate (4) used to support the powder bed (25).

2. An ALM method according to claim 1, wherein at least some of said successive steps in which energy (9) is focussed on a support area (27) of a respective powder layer (24) also involve focussing energy (9) on a said predetermined area (26) of the powder layer to fuse said area (26) of the powder layer and thereby form a cross-section of the product (20), the support area (27) and the predetermined area (26) being spaced apart.

3. An ALM method according to claim 1 or claim 2, wherein said at least one support pin (22) extends generally downwardly from said downwardly facing surface (21) of the product.

4. An ALM method according to any preceding claim, wherein said successive steps in which energy (9) is focussed on a support area (27) of the respective powder layer (24) involve focussing energy (9) on a plurality of said support areas (27) in spaced relation to one another, to thereby form successive cross-sections of a plurality of said support pins (22), the support pins (22) being formed in a spaced array within the powder bed (25).

5. An ALM method according to claim 4, wherein said support pins (22) are parallel to one another.

6. An ALM method according to any preceding claim, in which the or each support pin is cylindrical.

7. An ALM method according to claim 6, in which the or each support pin (22) has a diameter in the range of 0.2mm to 2mm.

8. An ALM method according to any preceding claim, wherein the or each said support area (27) is approximately circular, and energy (9) is focussed on successive said support areas (27) of respective powder layers (24) which are in alignment to one another to form successive circular cross-sections of the or each support pin (22) which is thus cylindrical.

9. An ALM method according to claim 8, in which the or each support pin (22) is formed so as to extend vertically within the powder bed (25).

10. An ALM method according to any one of claims 1 to 7, wherein the or each said support area (27) is approximately elliptical, and energy (9) is focussed on successive said support areas (27) of respective powder layers which are imbricated to form successive elliptical cross-sections of the or each support pin (22) which is thus cylindrical.

11. An ALM method according to claim 10, wherein the or each support pin (22) is formed so as to extend non-vertically within the powder bed (25).

12. An ALM method according to any preceding claim, wherein the free end of the or each said support pin (22) is formed by focussing energy (9) on an initial support area (27) which is supported only by underlying unfused powder in the powder bed (25), to fuse said initial support area (27) and thereby form the free end.

13. An ALM method according to any preceding claim, the method being used to manufacture a metal component (20), in which said powder is metal powder, and in which said steps of focussing energy (9) on said areas (26, 27) of the powder layers (24) involves the use of an electron beam (9) to melt said areas of the powder layers.

14. Use of a method according to any preceding claim to manufacture a component of a gas turbine engine, involving the step of removing the or each said support pin (22) from said product (20) to form said component.

## Patentansprüche

1. Verfahren zum Herstellen einer additiven Schicht (ALM) für die Produktion eines dreidimensionalen Produkts (20) mittels fortlaufender Verschmelzung von Teilen eines Pulverbetts (25), wobei die Teile fortlaufenden Querschnitten des Produkts (20) entsprechen, wobei das Verfahren die Schritte umfasst: a) ein Ablegen einer Pulverschicht (24) auf dem Pulverbett (25) und b) ein Konzentrieren von Energie (9) auf einem vorgegebenen Bereich (26) der Pulverschicht, um den Bereich (26) der Pulverschicht zu verschmelzen und dadurch einen Querschnitt des Produkts (20) zu bilden; wobei die Schritte a) und b) wiederholt werden, um fortlaufende Querschnitte des Produkts (20) zu bilden, und wobei mindestens einer der Schritte b) ein Konzentrieren der Energie (9) auf einen Bereich (26) der jeweiligen Pulverschicht bedingt, die mindestens teilweise nicht durch einen vorher gebildeten Querschnitt des Produkts (20) getragen wird, um dadurch eine abwärts ausgerichtete Fläche (21) des Produkts zu bilden, wobei das Verfahren **dadurch gekennzeichnet** wird, dass mindestens einige der fortlaufenden Schritte b) ein Konzentrieren von Energie (9) auf einem Trägerbereich (27) der jeweiligen Pulverschicht bedingen, um den Trägerbereich (27) zu verschmelzen und dadurch fortlaufende Querschnitte eines mindestens einen Trägerstifts (22) innerhalb des Pulverbetts (25) zu bilden, wobei der mindestens eine Trägerstift (22) sich von der abwärts ausgerichteten Fläche (21) des Produkts nach außen erstreckt, wenn er gebildet wird, die abwärts ausgerichtete Fläche (21) zu tragen, wobei der mindestens eine Trägerstift (22) ein freies Ende aufweist, das innerhalb des Pulverbetts (25) gebildet wird, wobei das freie Ende des oder jedes Trägerstifts (22) von jeder anderen Fläche des Produkts (20) mit Abstand angeordnet wird und auch von jeder Grundplatte (4) mit Abstand angeordnet wird, die verwendet wird, das Pulverbett (25) zu tragen.

2. ALM-Verfahren nach Anspruch 1, wobei mindestens einige der fortlaufenden Schritte, in denen Energie (9) auf einen Trägerbereich (27) einer jeweiligen Pulverschicht (24) konzentriert wird, auch ein Konzentrieren von Energie (9) auf den vorgegebenen Bereich (26) der Pulverschicht bedingen, um den Bereich (26) der Pulverschicht zu sichern und dadurch einen Querschnitt des Produkts (20) zu bilden, wobei der Trägerbereich (27) und der vorgegebene Bereich (26) räumlich getrennt werden.

3. ALM-Verfahren nach Anspruch 1 oder Anspruch 2, wobei der mindestens eine Trägerstift (22) sich allgemein abwärts von der abwärts ausgerichteten Fläche (21) des Produkts erstreckt.

4. ALM-Verfahren nach einem vorhergehenden Anspruch, wobei die fortlaufenden Schritte, in denen Energie (9) auf einen Trägerbereich (27) der jeweiligen Pulverschicht (24) konzentriert wird, ein Konzentrieren von Energie (9) auf eine Vielzahl der Trägerbereiche (27) in zueinander verteilter Beziehung bedingen, um fortlaufende Querschnitte einer Vielzahl der Trägerstifte (22) zu bilden, wobei die Trägerstifte (22) in einer verteilten Anordnung innerhalb des Pulverbetts (25) gebildet werden.

5. ALM-Verfahren nach Anspruch 4, wobei die Trägerstifte (22) parallel zueinander sind.

6. ALM-Verfahren nach einem vorhergehenden Anspruch, in dem der oder jeder Trägerstift zylindrisch ist.

7. ALM-Verfahren nach Anspruch 6, in dem der oder jeder Trägerstift (22) einen Durchmesser im Bereich von 0,2 mm bis 2 mm aufweist.

8. ALM-Verfahren nach einem vorhergehenden Anspruch, wobei der oder jeder Trägerbereich (27) näherungsweise kreisförmig ist und Energie (9) auf fortlaufende Trägerbereiche (27) der jeweiligen Pulverschichten (24) konzentriert wird, die zueinander in Ausrichtung sind, um fortlaufende kreisförmige Querschnitte des oder jedes Trägerstifts (22) zu bilden, der somit zylindrisch ist.

9. ALM-Verfahren nach Anspruch 8, in dem der oder jeder Trägerstift (22) so gebildet wird, dass er sich innerhalb des Pulverbetts (25) senkrecht erstreckt.

10. ALM-Verfahren nach einem der Ansprüche 1 bis 7, wobei der oder jeder Trägerbereich (27) näherungsweise elliptisch ist und Energie (9) auf fortlaufende Trägerbereiche (27) der jeweiligen Pulverschichten konzentriert wird, die überlappend angeordnet werden, um fortlaufende elliptische Querschnitte des oder jedes Trägerstifts (22) zu bilden, der somit zylindrisch ist.

11. ALM-Verfahren nach Anspruch 10, wobei der oder jeder Trägerstift (22) so ausgebildet wird, dass er sich innerhalb des Pulverbetts (25) nicht senkrecht erstreckt.

12. ALM-Verfahren nach einem vorhergehenden Anspruch, wobei das freie Ende des oder jedes Trägerstifts (22) durch Konzentrieren von Energie (9) auf einen Anfangsträgerbereich (27) gebildet wird, der nur durch darunterliegendes ungeschmolzenes Pulver in dem Pulverbett (25) getragen wird, um den Anfangsträgerbereich (27) zu schmelzen und dadurch das freie Ende zu bilden.

13. ALM-Verfahren nach einem vorhergehenden Anspruch, wobei das Verfahren verwendet wird, eine Metallkomponente (20) zu fertigen, in der das Pulver Metallpulver ist, und in dem die Schritte des Konzentrierens von Energie (9) auf die Bereiche (26, 27) der Pulverschichten (24) den Einsatz eines Elektronenstrahls (9) bedingen, um die Bereiche der Pulverschichten zu schmelzen.

14. Einsatz eines Verfahrens nach einem vorhergehenden Anspruch, um eine Komponente eines Gasturbinenmotors zu fertigen, das den Schritt eines Entfernens des oder jedes Trägerstifts (22) aus dem Produkt (20) bedingt, um die Komponente zu bilden.

## Revendications

1. Procédé de fabrication additive par couches (ALM) pour la production d'un produit à trois-dimensions (20) par l'intermédiaire de fusions successives de parties d'un lit de poudre (25), lesdites parties correspondant à des sections transversales successives du produit (20), le procédé comprenant les étapes de : a) dépôt d'une couche de poudre (24) sur ledit lit de poudre (25) et b) concentration d'énergie (9) sur une zone prédéfinie (26) de ladite couche de poudre pour fusionner ladite zone (26) de la couche de poudre et former ainsi une section transversale du produit (20) ; lesdites étapes a) et b) étant répétées pour former des sections transversales successives du produit (20), et au moins l'une desdites étapes b) impliquant la concentration de ladite énergie (9) sur une zone (26) de la couche de poudre respective qui est au moins partiellement non supportée par une section transversale précédemment formée du produit (20) pour former ainsi une surface faisant face vers le bas (21) du produit, le procédé étant **caractérisé en ce qu'**au moins certaines desdites étapes successives b) impliquent une concentration d'énergie (9) sur une zone de support (27) de la couche de poudre respective, pour fusionner la zone de support (27) et former ainsi des sections transversales successives d'au moins une broche de support (22) dans le lit de poudre (25), ladite au moins une broche de support (22) s'étendant vers l'extérieur à partir de la surface faisant face vers le bas (21) du produit lorsqu'il est formé, de façon à supporter la surface faisant face vers le bas (21), ladite au moins une broche de support (22) possédant une extrémité libre qui est formée dans le lit de poudre (25), ladite extrémité libre de ladite ou de chaque broche de support (22) étant espacée de toute autre surface du produit (20) et étant également espacée de toute plaque de base (4) utilisée pour supporter le lit de poudre (25).

2. Procédé d'ALM selon la revendication 1, au moins certaines desdites étapes successives dans lesquelles l'énergie (9) est concentrée sur une zone de support (27) d'une couche de poudre respective (24) impliquant également la concentration d'énergie (9) sur une zone prédéfinie (26) de la couche de poudre pour fusionner ladite zone (26) de la couche de poudre et former ainsi une section transversale du produit (20), ladite zone de support (27) et ladite zone prédéfinie (26) étant espacées l'une de l'autre.

3. Procédé d'ALM selon la revendication 1 ou 2, ladite au moins une broche de support (22) s'étendant généralement vers le bas à partir de ladite surface faisant face vers le bas (21) du produit.

4. Procédé d'ALM selon l'une quelconque des revendications précédentes, lesdites étapes successives dans lesquelles l'énergie (9) est concentrée sur une zone de support (27) de la couche de poudre respective (24) impliquant la concentration d'énergie (9) sur une pluralité desdites zones de support (27) dans une relation espacée les unes par rapport aux autres, pour former ainsi des sections transversales successives d'une pluralité desdites broches de support (22), lesdites broches de support (22) étant formées en un réseau espacé dans le lit de poudre (25).

5. Procédé d'ALM selon la revendication 4, lesdites broches de support (22) étant parallèles entre elles.

6. Procédé d'ALM selon l'une quelconque des revendications précédentes, ladite ou chaque broche de support étant cylindrique.

7. Procédé d'ALM selon la revendication 6, ladite ou chaque broche de support (22) possédant un diamètre compris dans la plage allant de 0,2 mm à 2 mm.

8. Procédé d'ALM selon l'une quelconque des revendications précédentes, ladite ou chaque zone de support (27) étant approximativement circulaire et ladite énergie (9) étant concentrée sur lesdites zones de support successives (27) des couches de poudre respectives (24) qui sont alignées les unes par rapport aux autres pour former des sections transversales circulaires successives de ladite ou de chaque broche de support (22) qui est ainsi cylindrique.

9. Procédé d'ALM selon la revendication 8, ladite ou chaque broche de support (22) étant formée de façon à s'étendre verticalement dans le lit de poudre (25).

10. Procédé d'ALM selon l'une quelconque des revendications 1 à 7, ladite ou chaque zone de support (27) étant approximativement elliptique et ladite énergie (9) étant concentrée sur lesdites zones de support successives (27) des couches de poudre respectives qui sont imbriquées pour former des sections transversales successives elliptiques de la ou de chaque broche de support (22) qui est ainsi cylindrique.

11. Procédé d'ALM selon la revendication 10, ladite ou chaque broche de support (22) étant formée de façon à s'étendre non verticalement dans le lit de poudre (25).

12. Procédé d'ALM selon l'une quelconque des revendications précédentes, ladite extrémité libre de ladite ou de chaque broche de support (22) étant formée en concentrant l'énergie (9) sur une zone de support initiale (27) qui est supportée uniquement par une poudre non fusionnée sous-jacente dans le lit de poudre (25) pour fusionner ladite zone de support initiale (27) et former ainsi l'extrémité libre.

13. Procédé d'ALM selon l'une quelconque des revendications précédentes, ledit procédé étant utilisé pour fabriquer un composant métallique (20), ladite poudre étant une poudre métallique et lesdites étapes de concentration d'énergie (9) sur lesdites zones (26, 27) des couches de poudre (24) impliquant l'utilisation d'un faisceau d'électrons (9) pour faire fondre lesdites zones des couches de poudre.

14. Utilisation d'un procédé selon l'une quelconque des revendications précédentes, pour fabriquer un composant d'un moteur à turbine à gaz, impliquant l'étape d'enlever ledit ou chaque broche de support (22) dudit produit (20) pour former ledit composant.
